(19) Europäisches Patentamt
European Patent Office
Office européen des brevets

(11) **EP 4 322 396 A1**

(12) **EUROPEAN PATENT APPLICATION**
published in accordance with Art. 153(4) EPC

(43) Date of publication:
**14.02.2024  Bulletin 2024/07**

(21) Application number: **21936036.9**

(22) Date of filing: **08.04.2021**

(51) International Patent Classification (IPC):
**H02P 29/024** (2016.01)

(52) Cooperative Patent Classification (CPC):
**H02P 29/024**

(86) International application number:
**PCT/JP2021/014928**

(87) International publication number:
**WO 2022/215232 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **INOUE, Hiroshi**
  **Tokyo 100-8310 (JP)**
• **HIRAKIDA, Ken**
  **Tokyo 100-8310 (JP)**
• **KANEMARU, Makoto**
  **Tokyo 100-8310 (JP)**
• **NAKAMURA, Takaharu**
  **Tokyo 100-8310 (JP)**

(74) Representative: **Meissner Bolte Partnerschaft
mbB**
**Patentanwälte Rechtsanwälte**
**Postfach 86 06 24**
**81633 München (DE)**

(54) **ABNORMALITY DIAGNOSIS DEVICE AND ABNORMALITY DIAGNOSIS METHOD**

(57)     An abnormality diagnosis device (100) includes: a data acquisition unit (121) which acquires time-series data of current values of a current for driving an electric motor (711), and data of a load torque and a drive frequency of the electric motor (711); a feature quantity calculation unit (123) which calculates a plurality of feature quantities from the time-series data of the current values; an operation mode determination unit (122) which determines an operation mode of a compressor (71) on the basis of the load torque and the drive frequency; a feature quantity distribution generation unit (125) which generates a feature quantity distribution from values of the plurality of feature quantities; a reference region generation unit (126) which generates a reference region on the basis of the feature quantity distribution that is obtained in a normal case; a storage unit (130) which stores therein the reference region correspondingly to the operation mode; and a determination unit (127) which compares the feature quantity distribution that is obtained during an abnormality diagnosis and the reference region corresponding to the operation mode that is applied during the abnormality diagnosis, to determine whether an abnormality is present or absent in either of the compressor (71) and the electric motor (711).

FIG. 3

**Description**

TECHNICAL FIELD

The present invention relates to an abnormality diagnosis device and an abnormality diagnosis method.

BACKGROUND ART

An abnormality diagnosis device that performs a diagnosis as to abnormalities of an electric motor and a load in an air conditioner or the like has been conventionally known. Such a conventional abnormality diagnosis device performs: classification into a mode in which the electric motor is "stopped", a mode in which the load is present (a "loaded" mode), and a mode in which the load is absent (an "unloaded" mode); and an abnormality diagnosis on the electric motor and the load in each of the classified modes, thereby detecting an abnormality (see, for example, Patent Document 1).

CITATION LIST

PATENT DOCUMENT

Patent Document 1: Japanese Laid-Open Patent Publication JP 2019- 79 356 A

SUMMARY OF THE INVENTION

PROBLEM TO BE SOLVED BY THE INVENTION

However, in the above abnormality diagnosis device, an accurate abnormality diagnosis might be unable to be performed if the load is constantly applied and fluctuates. This is because state quantities for use in an abnormality diagnosis such as a current value also fluctuate in association with the fluctuation of the load, and thus, even when the mode is unchanged from the "loaded" mode, the states of the load and the electric motor continue to change. Such a situation is assumed to occur in, for example, an air conditioner for constantly adjusting the temperature. This is because, if a diagnosis as to abnormalities of an electric motor and a load used in such an air conditioner is performed with a current value, the load torque and the rotation speed of the electric motor constantly fluctuate along with changes in outside air and a setting temperature, and, in association with this fluctuation, the range of the current value in a normal state also fluctuates.

The present invention has been made to solve the above problem, and an object of the present invention is to provide an abnormality diagnosis device and an abnormality diagnosis method that enable an appropriate diagnosis as to whether an abnormality is present or absent in a diagnosis target being operated.

MEANS TO SOLVE THE PROBLEM

An abnormality diagnosis device according to the present invention is an abnormality diagnosis device which performs, on a diagnosis target being operated, an abnormality diagnosis on the basis of a first state quantity and a second state quantity each indicating a state of the diagnosis target, the abnormality diagnosis device including: a data acquisition unit which acquires one or both of time-series data and frequency-series data of the first state quantity, and data of the second state quantity; a feature quantity calculation unit which calculates a plurality of feature quantities from said one or both of the time-series data and the frequency-series data of the first state quantity; an operation mode determination unit which determines an operation mode of the diagnosis target on the basis of the second state quantity; a feature quantity distribution generation unit which generates a feature quantity distribution in a feature space on the basis of feature vectors each having values of the plurality of feature quantities as components thereof; a reference generation unit which generates, as a reference, a reference distribution or a reference region in the feature space on the basis of the feature quantity distribution obtained from the diagnosis target in a normal state; a storage unit which stores therein the reference correspondingly to the operation mode that is applied when the reference is generated; and a determination unit which compares the feature quantity distribution that is obtained during an abnormality diagnosis and the reference corresponding to the operation mode that is applied during the abnormality diagnosis, to determine whether an abnormality is present or absent in the diagnosis target.

In addition, an abnormality diagnosis method according to the present invention is an abnormality diagnosis method for performing, on a diagnosis target being operated, an abnormality diagnosis on the basis of a first state quantity and a second state quantity each indicating a state of the diagnosis target, the abnormality diagnosis method including: a step of acquiring one or both of time-series data and frequency-series data of the first state quantity, and data of the second state quantity; a step of calculating a plurality of feature quantities from said one or both of the time-series data and the frequency-series data of the first state quantity; a step of determining an operation mode of the diagnosis target on the basis of the second state quantity; a step of generating a feature quantity distribution in a feature space on the basis of feature vectors each having values of the plurality of feature quantities as components thereof; a step of generating, as a reference, a reference distribution or a reference region in the feature space on the basis of the feature quantity distribution obtained from the diagnosis target in a normal state; a step of storing the reference correspondingly to the operation mode that is applied when the reference is generated; and a step of comparing the feature quantity distribution that is obtained during an abnormality diagnosis and the reference corresponding to the operation mode that is applied during the abnormality diagnosis, to determine whether an abnormality is present or absent in the diagnosis target.

EFFECT OF THE INVENTION

The abnormality diagnosis device and the abnormality diagnosis method according to the present invention enable an appropriate diagnosis as to whether an abnormality is present or absent in a diagnosis target being operated.

BRIEF DESCRIPTION OF THE DRAWINGS

FIG. 1 schematically shows an air conditioner according to Embodiment 1.
FIG. 2 is a schematic configuration diagram showing an abnormality diagnosis device in Embodiment 1.
FIG. 3 is a block diagram showing the abnormality diagnosis device in Embodiment 1.
FIG. 4 is a diagram for explaining a Clarke transformation unit and a Park transformation unit according to Embodiment 1.
FIG. 5 is a flowchart showing operation of an abnormality diagnosis unit according to Embodiment 1.
FIG. 6 is a flowchart showing reference region generation according to Embodiment 1.
FIG. 7 is a flowchart showing an abnormality diagnosis according to Embodiment 1.
FIG. 8 shows a result of principal component analysis based on feature quantities.
FIG. 9 shows reference regions for respective different operation modes.
FIG. 10 shows an example of operation modes classified according to drive frequencies and load torques.
FIG. 11 shows an example of a hardware configuration of the abnormality diagnosis device in Embodiment 1.

DESCRIPTION OF EMBODIMENTS

Embodiment 1

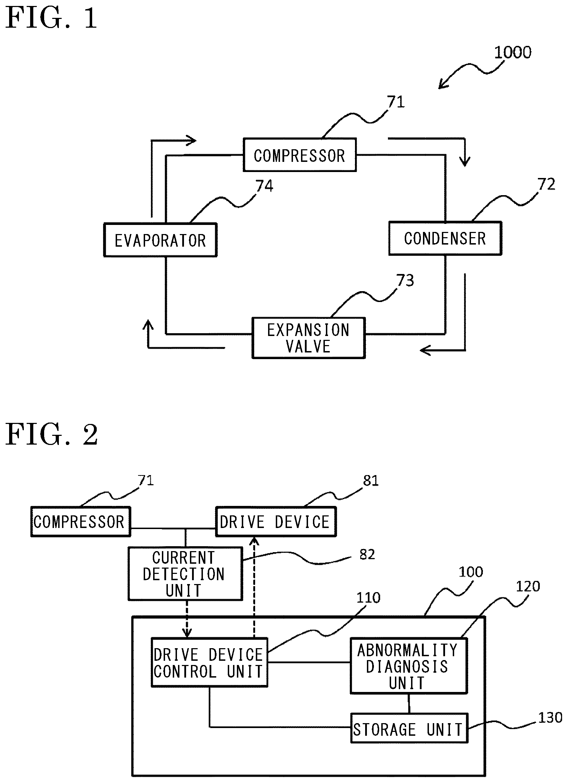

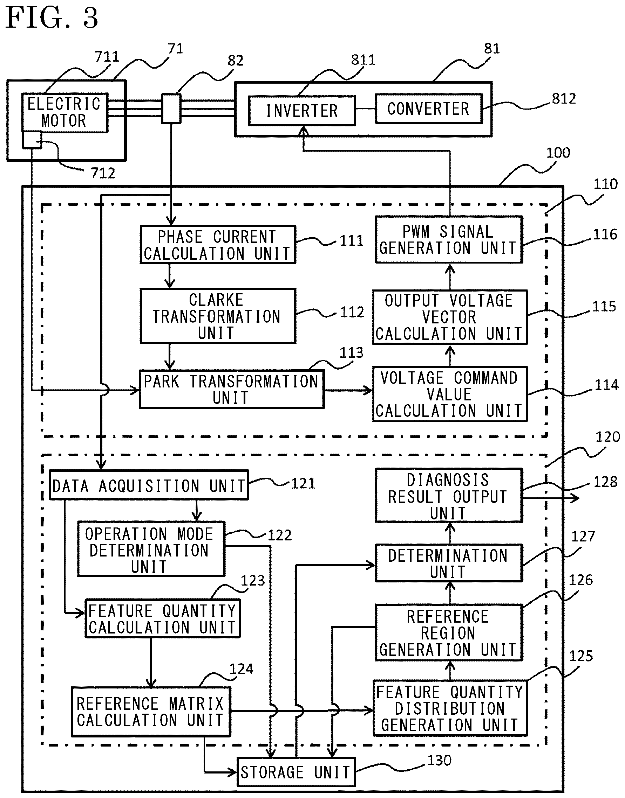

Embodiment 1 will be described with reference to FIG. 1 to FIG. 11. In Embodiment 1, a compressor of a constantly-operated air conditioner and an electric motor provided to the compressor will be described as examples of the "diagnosis target". FIG. 1 schematically shows an air conditioner according to Embodiment 1. FIG. 2 is a schematic configuration diagram showing an abnormality diagnosis device in Embodiment 1. FIG. 3 is a block diagram showing the abnormality diagnosis device in Embodiment 1. An air conditioner 1000 includes a compressor 71, a condenser 72, an expansion valve 73, and an evaporator 74 and is operated as a refrigeration cycle device by circulating a refrigerant through the compressor 71, the condenser 72, the expansion valve 73, and the evaporator 74 in this order.

The compressor 71 compresses a refrigerant in gas form (gas refrigerant) and discharges the gas refrigerant to the condenser 72. The condenser 72 condenses the gas refrigerant, which has been discharged from the compressor 71, so as to generate a refrigerant in liquid form (liquid refrigerant). At this time, the refrigerant passing through the condenser 72 dissipates heat of condensation to ambient air. The condenser 72 discharges the generated liquid refrigerant to the expansion valve 73. The expansion valve 73 has an opening degree controlled by a control device (not shown), thereby decompressing and expanding the liquid refrigerant discharged from the condenser 72. The expanded liquid refrigerant is sent to the evaporator 74. The evaporator 74 evaporates the expanded liquid refrigerant so as to generate a gas refrigerant. At this time, the refrigerant passing through the evaporator 74 absorbs heat of evaporation from the ambient air. The evaporator 74 discharges the generated gas refrigerant to the compressor 71.

The compressor 71 is connected to a drive device 81 as shown in FIG. 2 and includes therein, as shown in FIG. 3, an electric motor 711 and an angle sensor 712 which measures a rotation angle $\theta$ (mechanical angle) of a rotor (not shown) of the electric motor 711. The compressor 71 is connected also to a compression mechanism (not shown). The electric motor 711 is driven by the drive device 81, whereby the rotor is rotated. Through the rotation of the rotor, the compression mechanism is operated, whereby the gas refrigerant is compressed.

An abnormality diagnosis device 100 in Embodiment 1 has also a function of controlling the drive device 81 and includes a drive device control unit 110, an abnormality diagnosis unit 120, and a storage unit 130. The drive device control unit 110 acquires a current detection value from a current detection unit 82 for detecting current flowing between the compressor 71 and the drive device 81, and controls the drive device 81 through feedback control. The abnormality diagnosis unit 120 performs a diagnosis as to whether an abnormality is present or absent in the electric motor 711 and the like, on the basis of: the current value detected by the current detection unit 82, i.e., data of a first state quantity; and a load torque and a drive frequency indicating an operation mode (described later in detail) of the compressor 71, i.e., data of second state quantities. The storage unit 130 stores therein, as necessary, results of calculation performed by the drive device control unit 110 and the abnormality diagnosis unit 120, and the like. The current detection unit 82 is configured to, owing to a plurality of current sensors (the number of which is represented by N), have N measurement points.

The drive device 81 includes an inverter 811 and a converter 812. The converter 812 receives AC current supplied from an AC power supply (not shown), converts the AC current into DC current, and supplies the DC current to the inverter 811. The frequency of the AC current to be supplied to the converter 812 from the AC power supply is predetermined and is, for example, 50 Hz or 60 Hz.

The inverter 811 is provided with an inverter main circuit including a plurality of switching elements and is controlled by the drive device control unit 110 of the abnormality diagnosis device 100. Neither the above plurality of switching elements nor the above inverter main circuit is shown. The drive device control unit 110 transmits pulse width modulation (PWM) signals to the inverter 811 so as to switch ON/OFF of the switching elements of the inverter main circuit, thereby causing the inverter 811 to output currents for three phases (a U phase, a V phase, and a W phase) for driving the electric motor 711 of the compressor 71.

The current detection unit 82 provided between the electric motor 711 and the drive device 81 detects a U-phase current Iu and a V-phase current Iv among the currents for the three phases outputted to the electric motor 711, and outputs the current value of the U-phase current Iu and the current value of the V-phase current Iv. These current values are sometimes denoted by Iu and Iv as well. Meanwhile, the current value of a W-phase current Iw can be calculated from the current value of the U-phase current Iu and the current value of the V-phase current Iv, and thus the current detection unit 82 only has to output the current values for at least two phases among the three phases.

The drive device control unit 110 is for outputting PWM signals to the inverter 811 and performing vector control, and includes: a phase current calculation unit 111 which acquires the current values from the current detection unit 82 and calculates phase currents; a Clarke transformation unit 112 which performs Clarke transformation on the calculated phase currents, to obtain current values for two phases; a Park transformation unit 113 which performs Park transformation on the above current values for the two phases by using the rotation angle $\theta$ acquired by the angle sensor 712; a voltage command value calculation unit 114 which calculates a voltage command value for the inverter 811; an output voltage vector calculation unit 115 which calculates an output voltage vector from the voltage command value calculated by the voltage command value calculation unit 114; and a PWM signal generation unit 116 which generates PWM signals to be outputted to the inverter 811.

The phase current calculation unit 111 calculates a current value of the W-phase current Iw from the current value of the U-phase current Iu and the current value of the V-phase current Iv acquired from the current detection unit 82, and outputs the current values of the currents (Iu, Iv, and Iw) for the respective phases to the Clarke transformation unit 112. The currents (Iu, Iv, and Iw) for the respective phases change according to the rotation angle $\theta$ of the rotor of the electric motor 711. Although the rotation angle $\theta$ is described as a value measured by the angle sensor 712 in Embodiment 1, the angle sensor 712 is not an indispensable constituent. If the rotation angle $\theta$ is calculated through another method, the angle sensor 712 does not have to be provided. As the method for calculating the rotation angle $\theta$, there is, for example, a method in which the rotation angle $\theta$ is calculated from the currents (Iu, Iv, and Iw) for the respective phases and the voltage command value for the inverter 811 as in control that does not involve use of any position sensor. Since this calculation method is known, detailed description thereof will be omitted.

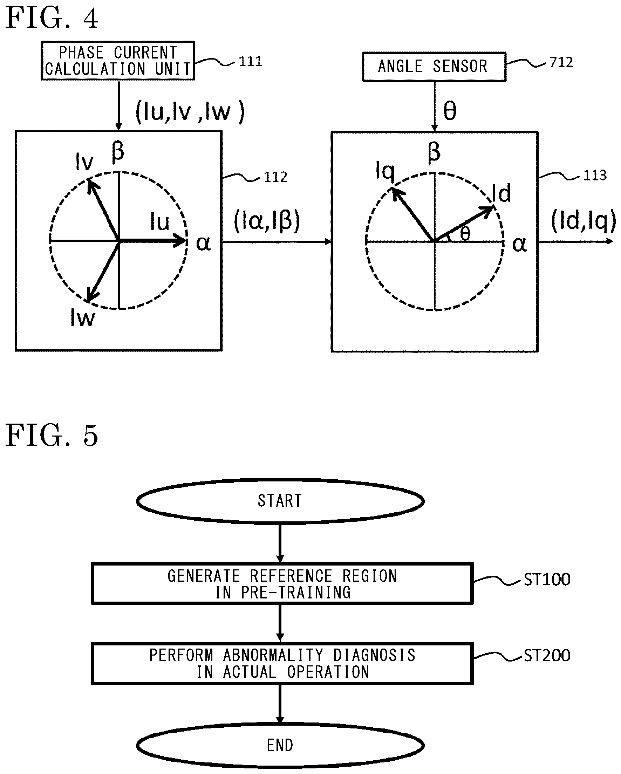

The Clarke transformation unit 112 and the Park transformation unit 113 will be described with reference to FIG. 4. As shown in FIG. 4, the current values of the currents (Iu, Iv, and Iw) for the respective phases outputted by the phase current calculation unit 111 are inputted to the Clarke transformation unit 112. The Clarke transformation unit 112 converts the currents Iu, Iv, and Iw for the three phases into currents (I$\alpha$ and I$\beta$) for two phases ($\alpha$ and $\beta$ phases) and outputs the currents (I$\alpha$ and I$\beta$) to the Park transformation unit 113. The currents (I$\alpha$ and I$\beta$) for the two phases are respectively expressed as I$\alpha$=Iu and I$\beta$=(Iu+2$\times$Iv)/$\sqrt{3}$.

The Park transformation unit 113 acquires the current values of the currents (I$\alpha$ and I$\beta$) for the $\alpha$ and $\beta$ phases from the Clarke transformation unit 112, acquires the rotation angle $\theta$ from the angle sensor 712, and converts the currents (I$\alpha$ and I$\beta$) for the $\alpha$ and $\beta$ phases in a coordinate system at rest into a d-axis current and a q-axis current (Id and Iq) corresponding to coordinates in a rotating coordinate system (d-q coordinate system). The Park transformation unit 113 outputs the d-axis current and the q-axis current (Id and Iq) to the voltage command value calculation unit 114.

The d-axis current Id is an excitation current component and generates a rotating magnetic field in the electric motor 711. The q-axis current Iq is a torque current component and generates a torque of the electric motor 711. The d-axis current and the q-axis current (Id and Iq) correspond to values obtained by measuring the currents (Iα and Iβ) for the two phases rotated at the rotation angle θ in the coordinate system at rest, in the rotating coordinate system in which follow-up to the rotation is performed. No change in the rotation angle θ is reflected in the d-axis current and the q-axis current (Id and Iq). The d-axis current and the q-axis current (Id and Iq) are respectively expressed as Id=Iα×cosθ+Iβ×sinθ and Iq=-Iα×sinθ+Iβ×cosθ.

The voltage command value calculation unit 114 calculates a command value for the output voltage of the inverter 811 such that the electric motor 711 outputs a desired torque and a desired rotation speed. The output voltage vector calculation unit 115 calculates an output voltage vector on the basis of the command value, for the output voltage, calculated by the voltage command value calculation unit 114. The PWM signal generation unit 116 generates a PWM signal for controlling the inverter 811, on the basis of the output voltage vector calculated by the output voltage vector calculation unit 115.

The abnormality diagnosis unit 120 has two functions which are a function of generating a reference region in pre-training and a function of performing an abnormality diagnosis in actual operation. The abnormality diagnosis unit 120 includes: a data acquisition unit 121 which acquires necessary data, in each of pre-training and actual operation; an operation mode determination unit 122 which determines an operation mode, in each of pre-training and actual operation; a feature quantity calculation unit 123 which calculates feature quantities for use in principal component analysis, in each of pre-training and actual operation; a reference matrix calculation unit 124 which calculates a reference matrix with which the dimension of each of feature vectors is to be reduced and the feature vector is to be projected onto a two-dimensional plane, in pre-training; a feature quantity distribution generation unit 125 which generates a two-dimensional distribution based on the feature quantities by using the reference matrix, in each of pre-training and actual operation; a reference region generation unit 126 which generates a reference region to be compared during an abnormality diagnosis, in pre-training; a determination unit 127 which determines, from the two-dimensional distribution based on the feature quantities, whether an abnormality is present or absent, in actual operation; and a diagnosis result output unit 128 which outputs the result of the abnormality diagnosis to outside, in actual operation.

In Embodiment 1, an abnormality diagnosis is performed by using the U-phase current Iu. This is because, when wear of a sliding part that occupies the majority of abnormalities of the compressor 71 occurs, vibrations occur in the gap between the rotor and a stator of the electric motor 711 so as to change a permeance, and thus it is effective to use the current value in an abnormality diagnosis for the compressor 71. In addition, since vibrations in the gap occur in the same manner also when a bearing of the electric motor 711 is worn, it is effective to use the current value also in an abnormality diagnosis for the electric motor 711. In addition, since the current detection unit 82 can be implemented by, for example, providing sensors to a power supply cable between the drive device 81 and the compressor 71, no additional sensor for an abnormality diagnosis is necessary. Therefore, the method that involves use of the current value can be said to be desirable also in that the method is advantageous in terms of cost. The current for use in an abnormality diagnosis is not limited to the U-phase current Iu and may be a current for another phase, i.e. the current Iv, Iw, among the currents for the three phases, may be either of the currents for the α and β phases, or may be either of the d-axis current and the q-axis current. In the case of using either of the currents for the α and β phases, Clarke transformation is necessary. Meanwhile, in the case of using either of the d-axis current and the q-axis current, Clarke transformation and Park transformation are necessary. In any of the cases, no additional sensor is necessary.

Hereinafter, while each functional unit of the abnormality diagnosis unit 120 is described in detail, operation of the abnormality diagnosis unit 120 will be described. FIG. 5 is a flowchart showing operation of the abnormality diagnosis unit according to Embodiment 1. The abnormality diagnosis unit 120 performs reference region generation through pre-training (step ST100), and then performs an abnormality diagnosis in actual operation (step ST200). The abnormality diagnosis is periodically performed during operation of the air conditioner 1000. Reference region generation is also performed as necessary.

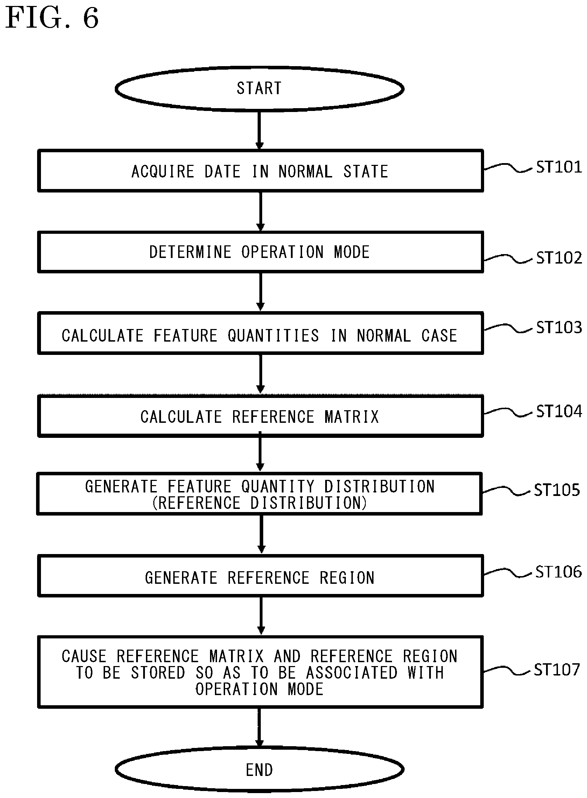

FIG. 6 is a flowchart showing reference region generation according to Embodiment 1. Reference region generation in pre-training needs to be performed in a normal state (a state where there is no abnormality). First, in the normal state, the data acquisition unit 121 acquires, from each of the N measurement points of the current detection unit 82, time-series data of a current value of the U-phase current Iu and acquires a present load torque and a present drive frequency (step ST101). The data acquisition unit 121 outputs the current value of the U-phase current Iu to the feature quantity calculation unit 123 and outputs the present load torque and the present drive frequency to the operation mode determination unit 122.

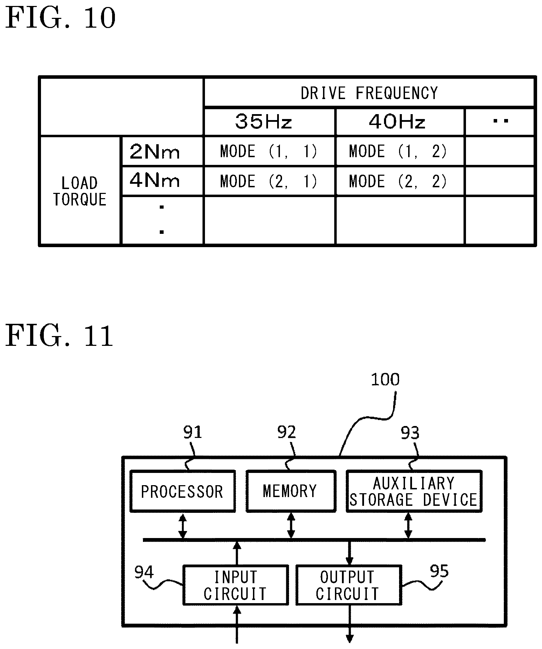

Next, the operation mode determination unit 122 determines a present operation mode on the basis of the present load torque and the present drive frequency acquired by the data acquisition unit 121 (step ST102). FIG. 10 shows an example of operation modes classified according to drive frequencies and load torques. As shown in FIG. 10, operation modes among the classified operation modes are defined as modes (1, 1), (1, 2), ⋯ in order from the operation mode at which the drive frequency is minimum, and operation modes among the classified operation modes are defined as modes (1, 1), (2, 1), ··· in order from the operation mode at which the load torque is minimum. Further, classification into m patterns of operation modes is performed according to the load torques, and classification into n patterns of operation modes is performed according to the drive frequencies. That is, classification into a total of m×n patterns of operation modes is performed.

As a method for acquiring data of a load torque, there is, for example, a method in which, after measurement regarding rotation in the electric motor 711 is performed, data of a rotation speed is acquired by the data acquisition unit 121, and a slip is calculated from the ratio between the rotation speed and the drive frequency so that a load torque is calculated. In this case, a measurement device for a rotation speed needs to be added. However, as a characteristic of the compressor 71, the load torque of the electric motor 711 is determined according to the drive frequency, and the outside air temperature and a target temperature of each device. If a load torque is estimated from these pieces of information, the value of the load torque can be acquired without the need for any additional sensor, and cost increase due to addition of a sensor can be prevented.

Although it is conceivable to define each operation mode in advance, it is also conceivable to define each operation mode in pre-training. Specifically, when data of load torques and data of drive frequencies are acquired in pre-training, operation modes are sequentially defined according to the load torques and the drive frequencies having been acquired. Since each of the load torques and the drive frequencies is a continuous value, an error range is set for target values of each operation mode. It is conceivable to set this error range to be up to the midpoint between target values of adjacent operation modes. For example, target values of the mode (1, 1) in FIG. 10 are a drive frequency of 35 Hz and a load torque of 2 Nm, and the mode (1, 1) is applied as long as the drive frequency is in a range of not lower than 0.0 Hz and lower than 37.5 Hz, and the load torque is in a range of not lower than 0.0 Nm and lower than 3.0 Nm. In a case where classification of operation modes according the load torques is performed at 0.5 Nm, a range of not lower than 0.0 and lower than 0.25 Nm, a range of not lower than 0.25 Nm and lower than 0.75 Nm, and a range of not lower than 0.75 Nm and lower than 1.25 Nm can be considered to be respective classifications.

Next, the feature quantity calculation unit 123 calculates feature quantities by using the current value of the U-phase current Iu (step ST103). Each of the feature quantities calculated in pre-training is a feature quantity in a normal case. The feature quantities are calculated by using all data acquired in one time of measurement. Each of the feature quantities based on the U-phase current Iu is a parameter indicating a current waveform of the U-phase current Iu. That is, conceivable specific examples of the feature quantities include: moments such as the average, the dispersion, the kurtosis, and the skewness of current values of the U-phase current Iu; local maximum values and local minimum values of the current values of the U-phase current Iu, and the average and the dispersion of these local maximum and minimum values; and the average and the dispersion of powers, square roots, and logarithms of the current values of the U-phase current Iu. Twelve feature quantities pt1 to pt12 used in Embodiment 1 are expressed with the following Expression (1) to Expression (12). In the following expressions, the current value of the U-phase current Iu is represented by I. Also, as described above, the number of measurement points for the U-phase current Iu is N, and thus current values obtained from the N measurement points are respectively represented by Ii (i=1, 2, ··•, and N). Each value of Ii is time-series data obtained at a predetermined time interval.

[Mathematical 1]

$$p_{t1} = \frac{\overline{I}}{\sigma} \quad \cdots (1)$$

[Mathematical 2]

$$p_{t2} = \frac{\sum_{i=1}^{N}\left(I_i - \bar{I}\right)^3}{N\sigma^3} \quad \cdots (2)$$

[Mathematical 3]

$$p_{t3} = \frac{\sum_{i=1}^{N}\left(I_i - \bar{I}\right)^4}{N\sigma^4} \quad \cdots (3)$$

Each overline (-) indicates the average value of the N current values. Also, σ indicates a standard deviation. The same applies to the subsequent expressions.
[Mathematical 4]

$$p_{t4} = \frac{\left|\bar{I}_{max}\right|}{\sqrt{(\sum_{i=1}^{N} I_i^2)/N}} \quad \cdots (4)$$

The numerator on the right-hand side of Expression (4) indicates the absolute value of the average of d (for example, d=10) current values selected, in order from the largest current value, from among the current values Ii acquired from the N measurement points.
[Mathematical 5]

$$p_{t5} = \frac{|\bar{I_p}|}{\sigma_p} \quad \cdots (5)$$

[Mathematical 6]

$$p_{t6} = \frac{|\bar{I_L}|}{\sigma_L} \quad \cdots (6)$$

The subscripts p and L respectively represent a local maximum value and a local minimum value of each current value Ii at the corresponding measurement point, within a predetermined time. That is, pt5 is a value obtained by dividing the average value of the local maximum values at the respective measurement points by the standard deviation of the local maximum values at the respective measurement points. Likewise, pt6 is a value obtained by dividing the average value of the local minimum values at the respective measurement points by the standard deviation of the local minimum values at the respective measurement points.

[Mathematical 7]

$$p_{t7} = \frac{\sum_{i=1}^{N} \sqrt{|I_i|}}{N\sqrt{\sigma}} \quad \cdots (7)$$

[Mathematical 8]

$$p_{t8} = \frac{\sqrt{(\sum_{i=1}^{N} I_i^2)/N}}{\sigma} \quad \cdots (8)$$

[Mathematical 9]

$$p_{t9} = \frac{\sum_{i=1}^{N} I_i^2}{N\sigma^2} \quad \cdots (9)$$

[Mathematical 10]

$$p_{t10} = \frac{\sum_{i=1}^{N} ln(|I_i| + 1)}{N ln(\sigma)} \cdots (10)$$

[Mathematical 11]

$$p_{t11} = \frac{1}{\sigma N_k} \sum_{I_i > \bar{I} + \sigma} I_i \quad \cdots (11)$$

[Mathematical 12]

$$p_{t12} = \frac{1}{\sigma N_h} \sum_{I_i < \bar{I} - \sigma} I_i \quad \cdots (12)$$

Nk represents the number of current values Ii larger than "the average value of the current values Ii + the standard deviation of the current values Ii" at a certain measurement time point, and Nh represents the number of current values Ii smaller than "the average values of the current values Ii - the standard deviation of the current values Ii" at the certain measurement time point. Each of pt11 and pt12 indicates the degree of influence of an outlier at the certain measurement time point.

As is known from Expression (1) to Expression (12), each of pt5 and pt6 among pt1 to pt12 is a feature quantity, the number of the feature quantities to be obtained within the predetermined time being one, and the other feature quantities are each time-series data. Although the number of the feature quantities is set to twelve in Embodiment 1, the number of the feature quantities is not limited thereto. For example, it is conceivable to use only some of the above twelve feature quantities. In addition, feature quantities related to current waveforms other than the above twelve feature quantities can also be combined.

The twelve feature quantities having been calculated are feature quantities indicating a normal state. In Embodiment 1, a distribution indicating a normal state is generated from the feature quantities in the normal state, and a reference for use in determination of normality/abnormality is generated on the basis of the distribution. In a case where a space that has a dimension equal to the number of the feature quantities and in which the values of the respective feature quantities indicate position coordinates is defined as a feature space, feature vectors each having the values of the respective feature quantities as components thereof indicate positions in the feature space. In a case where the feature quantities and the feature vectors are each time-series data, a fixed feature quantity distribution can be generated in the feature space on the basis of the feature vectors which are each time-series data. Here, various methods are available for actually generating such a feature quantity distribution. In Embodiment 1, the method of principal component analysis is employed to generate a feature quantity distribution with the dimension of each of the feature vectors being reduced. The principal component analysis is a method that includes: selecting, as a first principal component and a second principal component, axes at which dispersions are high in multidimensionality; and reducing the dimension of each of the feature vectors. After the dimension reduction, a feature quantity distribution is generated on a plane that has the first principal component and the second principal component as a vertical axis and a horizontal axis thereof, respectively. Although the dimension is reduced to two in Embodiment 1, the post-reduction dimension may be three or more.

After the feature quantities are calculated, the reference matrix calculation unit 124 calculates a reference matrix with which feature vectors each having, as components thereof, s (s≤12) feature quantities for use in an abnormality diagnosis are to be projected onto a two-dimensional plane (step ST104). As described above, this two-dimensional plane is a plane that has the first principal component and the second principal component as the vertical axis and the horizontal axis thereof, respectively. The s feature quantities (excluding pt5 and pt6) which are components of each of the feature vectors in Embodiment 1 are obtained as time-series data, and thus the feature vector having the s feature quantities as components thereof can also be obtained as time-series data. In a case where the feature vector includes pt5 and pt6, the corresponding components may be fixed at pt5 and pt6. In order to select a first principal component and a second principal component, it is necessary to obtain dispersions of the respective feature quantities that are each time-series data. Therefore, each time a feature quantity is calculated, the feature quantity is stored in the storage unit 130. In a case where a first principal component and a second principal component are selected from the s feature quantities, the reference matrix is a matrix having s rows and two columns. By applying this reference matrix to the feature vectors which are s-dimensional vectors, the feature vectors are projected onto the two-dimensional plane that has the first principal component and the second principal component as the vertical axis and the horizontal axis thereof.

Which feature quantities among the twelve types of feature quantities are to be used, is determined on the basis of whether or not the values of these feature quantities change depending on whether the compressor 71 and the electric motor 711 are normal or abnormal. A calculation amount and a storage amount can be reduced, if feature quantities that are not influenced by whether the compressor 71 and the electric motor 711 are normal or abnormal are eliminated from calculation targets in advance so that only the feature quantities, the values of which change depending on whether the compressor 71 and the electric motor 711 are normal or abnormal, are treated as calculation targets.

The number of times the current value of the U-phase current Iu is measured can be set to, for example, 100 in order to calculate the reference matrix, but is not limited thereto. A long calculation time is necessary for calculating a necessary number of feature quantities for the principal component analysis. Therefore, it is desirable to set the vacant interval between measurements of the U-phase current Iu to a certain period and calculate a feature quantity during the vacant period. It is conceivable that the interval between measurements is set to, for example, about 30 minutes.

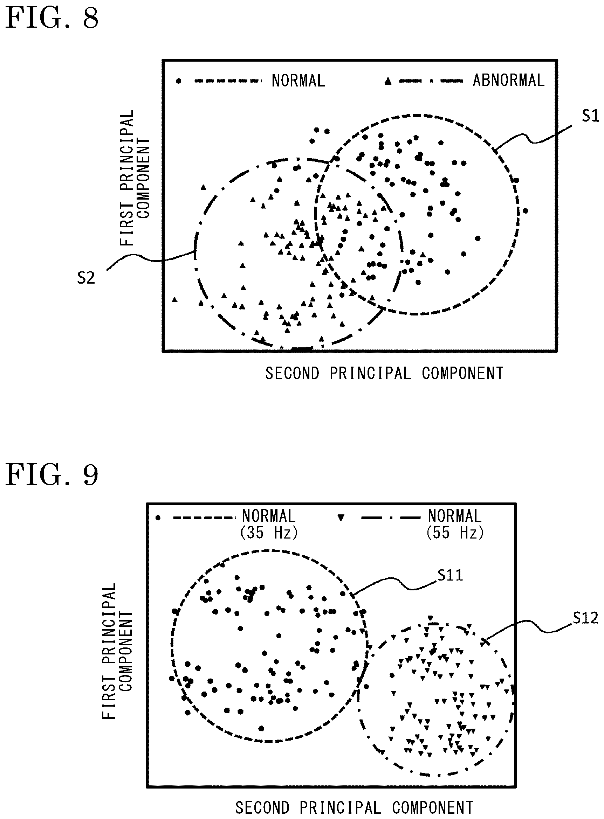

Next, the feature quantity distribution generation unit 125 generates a feature quantity distribution through projection of the feature vectors onto the two-dimensional plane by applying the reference matrix to the feature vectors (step ST105). When the feature vectors that are each time-series data are sequentially projected onto the two-dimensional plane, a distribution such as one shown in FIG. 8, FIG. 9 is generated. The distribution generated here is stored in the storage unit 130 as a reference distribution indicating a distribution that is obtained in a normal case.

Next, the reference region generation unit 126 generates a reference region on the basis of the reference distributions generated in step ST105 (step ST106). The reference region is generated such that a certain proportion of dots of the reference distribution is included in the region. This proportion is arbitrarily determined. However, if the proportion is excessively high, the reference region is enlarged, and this gives rise to the possibility that determination of a normality is performed in an abnormal state during an abnormality diagnosis. For example, in a case where the proportion is set to 100 %, i.e., a reference region is generated so as to include all the dots of the reference distribution, the reference region is generated so as to also include so-called "outliers". In this case, even data that should ordinarily be excluded ends up being treated as normal data, and this gives rise to the possibility that determination of a normality is performed in an abnormal state. In contrast, if the proportion is excessively low, a small reference region is generated, and this gives rise to the possibility that determination of an abnormality is performed in a normal state during an abnormality diagnosis. The reference region is generated to have, for example, a circular shape or an elliptical shape. However, the reference region may have a polygonal shape or the like as long as the region is appropriate and is generated according to the shape of the reference distribution. Although the reference region serves as a reference for use in an abnormality diagnosis in Embodiment 1, it is also conceivable to set the reference distribution to serve as the reference.

The storage unit 130 stores therein the reference matrix calculated by the reference matrix calculation unit 124 and the reference region generated by the reference region generation unit 126 such that the reference matrix and the reference region are associated with the present operation mode determined in step ST102 (step ST107). For different operation modes, respective different reference regions S11 and S12 are generated as in the example shown in FIG. 9, and thus each reference region needs to be stored so as to be associated with the corresponding present operation mode. Likewise, each reference matrix also needs to be stored so as to be associated with the corresponding present operation mode.

Determination of an operation mode is performed for preventing an erroneous diagnosis. In the air conditioner 1000, the opening degree of the expansion valve 73 is adjusted (the degree of superheat is controlled) on the basis of, for example, the pressure on a low-pressure side and the temperature at the exit of a pipe of the evaporator 74 so as to cause the degree of superheat at the exit of the pipe of the evaporator 74 to approach a target value, and the load torque fluctuates. At this time, the drive device control unit 110 of the abnormality diagnosis device 100 controls the drive frequency of the compressor 71 via the drive device 81. In this manner, the compressor 71 which needs to be continuously operated is operated on the basis of the difference between the air temperature and the target temperature in a state where the load torque and the drive frequency fluctuate at all times.

Since operation is performed in a state where the load torque and the drive frequency fluctuate at all times, the compressor 71 in a normal state is also such that the feature quantity in the case of a drive frequency of 35 Hz and the feature quantity in the case of a drive frequency of 55 Hz differ from each other, and thus a different reference matrix, a different reference distribution, and a different reference region are obtained. FIG. 9 shows: a reference distribution and a reference region in the case of the drive frequency of 35 Hz; and a reference distribution and a reference region in the case of the drive frequency of 55 Hz. From FIG. 9, it is found that a reference region S11 in the case of the drive frequency of 35 Hz and a reference region S12 in the case of the drive frequency of 55 Hz differ from each other. The different reference regions lead to different results of diagnosis as to normality/abnormality. Therefore, in an abnormality diagnosis, a reference region corresponding to the operation mode that is applied during the abnormality diagnosis needs to be used. If an abnormality diagnosis is performed by using a reference region corresponding to an operation mode different from the operation mode that is applied during the abnormality diagnosis, determination of an abnormality is performed in a normal state, or determination of normality is performed in an abnormal state. Consequently, erroneous detection of an abnormality or failure to detect an abnormality might occur. The same applies to a case where the load torque differs. Considering this, classification of operation modes such as one shown in FIG. 10 and determination of a present operation mode are performed in Embodiment 1.

It is necessary not to allow any change of the operation mode during a period in which the current value of the U-phase current Iu is measured and time-series data thereof is acquired. For example, in a case where the current value of the U-phase current Iu is measured at a sampling frequency of 48 kHz, the period of one time of measurement is assumed to be about 4 to 60 secconds. In order to determine a period of measurement so as not to allow any change of the operation mode during the measurement, in a case where the continuation period of a specific operation mode is known in advance, it is conceivable to set the continuation period to be the period of the measurement. Meanwhile, in a case where the continuation period of the specific operation mode is not known in advance, it is conceivable that, during pre-training, the continuation period of the same operation mode is measured and the measured period is stored in the storage unit 130 so that, during an abnormality diagnosis, the current value of the U-phase current Iu is measured within the range of the above measured period.

The storage unit 130 stores therein each feature quantity and the reference distribution as well during pre-training, and, if all of these data are stored, the amount of the stored data becomes enormous. Therefore, it is desirable to delete each piece of data from the storage unit 130 at the moment at which the piece of data becomes unnecessary. The current value of the U-phase current Iu is acquired as continuous time-series data in order to perform the principal component analysis, and the sampling frequency at which data is acquired is needed to an extent that allows the waveform of current to be ascertained on the basis of a feature quantity although the extent varies depending on the feature quantity. In the case of performing an abnormality diagnosis on the compressor 71, such a sampling frequency needs to be, in consideration of the U-phase current Iu having a frequency of about 20 Hz to 200 Hz at the time of continuous operation, about 10 to 500 times the maximum frequency (200 Hz), i.e., about 2 kHz to 100 kHz. In a case where pieces of time-series data of current values are acquired with the period of measurement being set to about 4 to 60 secconds under the above condition, the number of the pieces of data is a large value of 8000 (2 kHz, 4 secconds) to 6 million. The pieces of time-series data of the current values of the U-phase current Iu become unnecessary after feature quantities are calculated.

In addition, the number of pieces of data of the feature quantities for calculating dispersions is also large, and thus each piece of data is desirably deleted at the moment at which the piece of data becomes unnecessary. The pieces of data of the feature quantities (feature vectors) become unnecessary after a reference distribution is generated. Also, in the case of using a reference region as a reference for an abnormality diagnosis, the reference distribution also becomes unnecessary after the reference region is generated. Thus, when the reference distribution becomes unnecessary, data of the reference distribution may be deleted. It is also conceivable to store data with limitation to an operation mode, the continuation period of which has been long during pre-training.

Although time-series data of each current value is used for an abnormality diagnosis in Embodiment 1, it is also conceivable to perform an abnormality diagnosis by using frequency-series data, and it is also conceivable to use both the time-series data and the frequency-series data in combination. In the case of using pieces of frequency-series data, the number of the pieces of data is desirably set to a power of 2.

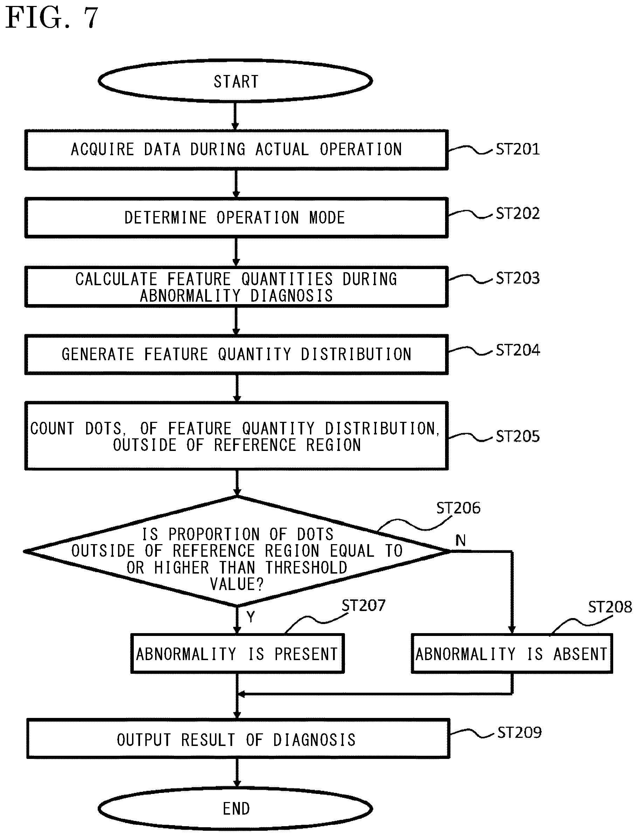

Next, an abnormality diagnosis will be described. FIG. 7 is a flowchart showing an abnormality diagnosis according to Embodiment 1. First, for the compressor 71 being actually operated, the data acquisition unit 121 acquires, from each of the N measurement points of the current detection unit 82, time-series data of a current value of the U-phase current Iu and acquires a present load torque and a present drive frequency (step ST201). The data acquisition unit 121 outputs the current value of the U-phase current Iu to the feature quantity calculation unit 123 and outputs the present load torque and the present drive frequency to the operation mode determination unit 122.

Next, the operation mode determination unit 122 determines a present operation mode on the basis of the present load torque and the present drive frequency acquired by the data acquisition unit 121 (step ST202). Descriptions about classification of the operation modes are the same as those made regarding step ST102. However, in actual operation, there is also the possibility that the load torque and the drive frequency on the basis of which an operation mode is determined become abnormal. Considering this, instead of a measurement value of the load torque, a command value of the load torque is acquired from the drive device control unit 110, and an operation mode is determined on the basis of the acquired command value. In a case where no command value of the load torque can be acquired, it is also conceivable to determine an operation mode according to a current value (not limited to the current value of the U-phase current). This is because, in general, a fluctuation of the current value due to change in the load torque is greater than a fluctuation of the current value due to an abnormality in the same operation mode. For example, there is an approximately 1.5-fold difference between the current value at a rated torque and the current value at no load.

Next, the feature quantity calculation unit 123 calculates feature quantities (step ST203). Calculation of the feature quantities is as described in explanations of step ST103, and thus will not be described.

Next, the feature quantity distribution generation unit 125 generates a feature quantity distribution on the two-dimensional plane from the feature quantities obtained through the calculation in step ST203 (step ST204). First, the feature quantity distribution generation unit 125 determines which feature quantities among the feature quantities obtained through the calculation in step ST203 are to be used to perform an abnormality diagnosis. Here, r ($r \leq 12$) feature quantities are assumed to be used. The feature quantity distribution generation unit 125 generates, as feature vectors, r-dimensional vectors each having the r feature quantities as components thereof and reads, from the storage unit 130, an r-row and two-column reference matrix that corresponds to the present operation mode and with which the r-dimensional feature vectors are to be projected onto the two-dimensional plane. The feature quantity distribution generation unit 125 generates a feature quantity distribution through projection of the r-dimensional feature vectors onto the two-dimensional plane that has the first principal component and the second principal component as the vertical axis and the horizontal axis thereof by applying the reference matrix to the r-dimensional feature vectors. Consequently, a distribution such as one shown in FIG. 8 can be obtained, for example.

Next, the determination unit 127 performs an abnormality diagnosis through comparison between the feature quantity distribution and a reference region. Specifically, the determination unit 127 counts the number of dots outside of a reference region S1 among the dots constituting the feature quantity distribution generated in step ST204 (step ST205) and determines whether or not the proportion of the dots, of the feature quantity distribution, that are outside of the reference region S1 is equal to or higher than a predetermined threshold value (for example, 50 %) (step ST206). In a case where the proportion is equal to or higher than the predetermined threshold value, the determination unit 127 determines that an abnormality has occurred (step ST207). In a case where the proportion is less than the predetermined threshold value, the determination unit 127 determines that there is no abnormality (step ST208). The determination unit 127 outputs the result of the diagnosis to the diagnosis result output unit 128. As methods for the abnormality diagnosis, there are also methods such as one involving comparison of the distance between populations. Any type of method may be employed as long as the method makes it possible to ascertain the difference between the feature quantity distribution and the reference region S1. It is also conceivable to set threshold values step by step also in the method in which the proportion of dots, of the feature quantity distribution, that are outside of the reference region S1 is used as a basis for a diagnosis. For example, setting is performed such that: replacement becomes indispensable at 90 % or higher; replacement is recommended at 70 % or higher; and replacement is considered at 50 % or higher. Thus, determination as to abnormality can be performed step by step. The region S2 in FIG. 8 indicates a feature quantity distribution in a case where the compressor 71 suffers from an abnormality such as wear of the sliding part, for example. In the example in FIG. 8, 70 % of the dots are outside of the reference region S1. Thus, in a case where the above predetermined threshold value is 50 %, determination of an abnormality is performed.

The feature quantities to be influenced differ according to the type of the abnormality, and thus the position of the feature quantity distribution in the case of an abnormality also differs according to the type of the abnormality. Therefore, whether the abnormality originates from the electric motor 711 or another unit of the compressor 71 can also be identified from the position of the feature quantity distribution.

Next, the diagnosis result output unit 128 outputs, to outside, the result of the diagnosis transmitted from the determination unit 127 (step ST209). The output destination for the result of the diagnosis is not particularly limited. For example, the result may be outputted to a display device such as a monitor, may be outputted in the form of sound such as an alarm, or may be outputted to an external storage device.

As abnormality diagnosis methods in which a plurality of feature quantities are used, there are, in addition to the principal component analysis employed in Embodiment 1, Taguchi methods, a method in which a Mahalanobis distance is used, and the like, and any type of method may be employed as long as the method allows detection of an abnormality.

A hardware configuration for implementing each functional unit of the abnormality diagnosis device 100 will be described. FIG. 11 shows an example of the hardware configuration of the abnormality diagnosis device in Embodiment 1. The abnormality diagnosis device 100 is mainly composed of a processor 91, a memory 92 as a main storage device, and an auxiliary storage device 93. The processor 91 is implemented by, for example, a central processing unit (CPU), an application specific integrated circuit (ASIC), a digital signal processor (DSP), a field programmable gate array (FPGA), or the like. The memory 92 is implemented by a volatile storage device such as a random access memory, and the auxiliary storage device 93 is implemented by a nonvolatile storage device such as a flash memory, a hard disk, or the like. The auxiliary storage device 93 stores therein a predetermined program to be executed by the processor 91, and, as appropriate, the processor 91 reads and executes the program to perform various kinds of calculation processing. At this time, the above predetermined program is temporarily saved from the auxiliary storage device 93 into the memory 92, and the processor 91 reads the program from the memory 92. As described above, calculation processing by each functional unit shown in FIG. 4 is realized through execution of the predetermined program by the processor 91. The result of the calculation processing by the processor 91 is temporarily stored in the memory 92 and is, according to the purpose of the executed calculation processing, stored in the auxiliary storage device 93.

In addition, the abnormality diagnosis device 100 includes: an input circuit 94 which receives various inputs from outside, such as the current values from the current detection unit 82; and an output circuit 95 for outputting a PWM signal for the inverter 811, the result of the diagnosis performed by the abnormality diagnosis unit 120, and the like.

In Embodiment 1, the abnormality diagnosis device 100 has a configuration in which both the drive device control unit 110 and the abnormality diagnosis unit 120 are provided. However, these units may be separate devices. That is, the abnormality diagnosis device 100 may be divided into: a device that performs only control of the drive device; and a device that performs only an abnormality diagnosis.

Embodiment 1 enables an appropriate diagnosis as to whether an abnormality is present or absent in the diagnosis target being operated. More specifically, the abnormality diagnosis device 100 includes: a feature quantity calculation unit which calculates a plurality of feature quantities from time-series data of current values of a current for driving an electric motor; an operation mode determination unit which determines an operation mode of a compressor on the basis of a load torque and a drive frequency; a feature quantity distribution generation unit which generates a feature quantity distribution from values of the plurality of feature quantities; a reference region generation unit which generates a reference region on the basis of the feature quantity distribution that is obtained in a normal case; a storage unit which stores therein the reference region correspondingly to the operation mode; and a determination unit which compares the feature quantity distribution that is obtained during an abnormality diagnosis and the reference region corresponding to the operation mode that is applied during the abnormality diagnosis, to determine whether an abnormality is present or absent in either of the compressor and the electric motor. At each of the time of reference region generation for an abnormality diagnosis and the time of an abnormality diagnosis, the operation mode determination unit determines an operation mode at said time. Further, at the time of reference region generation, the reference region is stored correspondingly to the relevant operation mode. Further, at the time of an abnormality diagnosis, the reference region corresponding to the operation mode that is applied at said time is used as a reference for the abnormality diagnosis. Consequently, for a constantly-operated diagnosis target, it is possible to, even in a situation in which the state of the diagnosis target being operated continues to change, set a comparison target corresponding to the feature quantity distribution that is obtained during the abnormality diagnosis and perform an appropriate abnormality diagnosis.

In addition, since the feature quantity distribution is generated with the dimension of each of the feature vectors being reduced, the calculation amount and the storage amount can be reduced.

In addition, since the principal component analysis is employed to reduce the dimension of the feature vector, information about the feature quantities can be prevented from being impaired owing to reduction of the dimension.

Although the invention is described above in terms of an exemplary embodiment, it should be understood that the various features, aspects, and functionality described in the embodiment are not limited in their applicability to the particular embodiment with which they are described, but instead can be applied alone or in various combinations to the embodiment of the invention.

It is therefore understood that numerous modifications which have not been exemplified can be devised without departing from the scope of the present invention. For example, at least one of the constituent components may be modified, added, or eliminated.

DESCRIPTION OF THE REFERENCE CHARACTERS

71 compressor
711 electric motor
81 drive device
82 current detection unit
100 abnormality diagnosis device
111 phase current calculation unit
120 abnormality diagnosis unit
121 data acquisition unit
122 operation mode determination unit
123 feature quantity calculation unit
124 reference matrix calculation unit
125 feature quantity distribution generation unit
126 reference region generation unit
127 determination unit
128 diagnosis result output unit
130 storage unit
S1, S11, S12 reference region

**Claims**

1. An abnormality diagnosis device which performs, on a diagnosis target being operated, an abnormality diagnosis on the basis of a first state quantity and a second state quantity each indicating a state of the diagnosis target, the abnormality diagnosis device comprising:

a data acquisition unit which acquires one or both of time-series data and frequency-series data of the first state quantity, and data of the second state quantity;

a feature quantity calculation unit which calculates a plurality of feature quantities from said one or both of the time-series data and the frequency-series data of the first state quantity;

an operation mode determination unit which determines an operation mode of the diagnosis target on the basis of the second state quantity;

a feature quantity distribution generation unit which generates a feature quantity distribution in a feature space on the basis of feature vectors each having values of the plurality of feature quantities as components thereof;

a reference generation unit which generates, as a reference, a reference distribution or a reference region in the feature space on the basis of the feature quantity distribution obtained from the diagnosis target in a normal state;

a storage unit which stores therein the reference correspondingly to the operation mode that is applied when the reference is generated; and

a determination unit which compares the feature quantity distribution that is obtained during an abnormality diagnosis and the reference corresponding to the operation mode that is applied during the abnormality diagnosis, to determine whether an abnormality is present or absent in the diagnosis target.

2. The abnormality diagnosis device according to claim 1, further comprising

a reference matrix calculation unit which calculates a reference matrix with which a dimension of each of the feature vectors is reduced, wherein
the feature quantity distribution generation unit generates the feature quantity distribution on the basis of the feature vector having a reduced dimension.

3. The abnormality diagnosis device according to claim 1 or 2, wherein
during generation of the reference, a continuation period of the same operation mode is measured, the measured period is stored in the storage unit, and, during the abnormality diagnosis, the first state quantity is acquired within a range of the measured period.

4. The abnormality diagnosis device according to any one of claims 1 to 3, wherein

the reference is the reference region, and
the determination unit determines that an abnormality is present in the diagnosis target, in a case where a proportion of dots outside of the reference region among dots constituting the feature quantity distribution that is obtained during the abnormality diagnosis, is equal to or higher than a predetermined threshold value.

5. The abnormality diagnosis device according to claim 4, wherein

the threshold value is composed of a plurality of threshold values having magnitudes different from one another, and
the determination unit compares the proportion and the plurality of threshold values, to determine an extent of the abnormality step by step.

6. The abnormality diagnosis device according to any one of claims 1 to 5, wherein
the determination unit identifies, on the basis of the feature quantity distribution that is obtained during the abnormality diagnosis, where an abnormality having occurred in the diagnosis target originates from.

7. The abnormality diagnosis device according to any one of claims 1 to 6, wherein
each of the feature vectors has, as a component thereof, only a value of a feature quantity among the feature quantities, the value changing depending on whether the diagnosis target is normal or abnormal.

8. The abnormality diagnosis device according to any one of claims 1 to 7, further comprising
a diagnosis result output unit which outputs a result of a diagnosis performed by the determination unit.

9. The abnormality diagnosis device according to any one of claims 1 to 8, wherein
the diagnosis target includes a compressor of an air conditioner and an electric motor provided to the compressor.

10. The abnormality diagnosis device according to claim 9, wherein

the second state quantity includes at least one of a load torque, a rotation speed, and a drive frequency of the electric motor.

11. The abnormality diagnosis device according to claim 10, wherein
the load torque is an estimation value estimated from a setting air temperature and an outside air temperature of the air conditioner.

12. The abnormality diagnosis device according to any one of claims 9 to 11, wherein
the first state quantity includes a current value of a current for driving the electric motor.

13. The abnormality diagnosis device according to claim 12, wherein
the current value includes at least one of: a current value of one phase current among currents for three phases; and a current value of a current in one axis of a rotating coordinate system.

14. An abnormality diagnosis method for performing, on a diagnosis target being operated, an abnormality diagnosis on the basis of a first state quantity and a second state quantity each indicating a state of the diagnosis target, the abnormality diagnosis method comprising:

a step of acquiring one or both of time-series data and frequency-series data of the first state quantity, and data of the second state quantity;
a step of calculating a plurality of feature quantities from said one or both of the time-series data and the frequency-series data of the first state quantity;
a step of determining an operation mode of the diagnosis target on the basis of the second state quantity;
a step of generating a feature quantity distribution in a feature space on the basis of feature vectors each having values of the plurality of feature quantities as components thereof;
a step of generating, as a reference, a reference distribution or a reference region in the feature space on the basis of the feature quantity distribution obtained from the diagnosis target in a normal state;
a step of storing the reference correspondingly to the operation mode that is applied when the reference is generated; and
a step of comparing the feature quantity distribution that is obtained during an abnormality diagnosis and the reference corresponding to the operation mode that is applied during the abnormality diagnosis, to determine whether an abnormality is present or absent in the diagnosis target.

FIG. 1

FIG. 2

FIG. 3

ELECTRIC MOTOR 711 71

82

INVERTER 811 81

CONVERTER 812

100

110

PHASE CURRENT CALCULATION UNIT 111

PWM SIGNAL GENERATION UNIT 116

CLARKE TRANSFORMATION UNIT 112

OUTPUT VOLTAGE VECTOR CALCULATION UNIT 115

PARK TRANSFORMATION UNIT 113

VOLTAGE COMMAND VALUE CALCULATION UNIT 114

712

120

DATA ACQUISITION UNIT 121

DIAGNOSIS RESULT OUTPUT UNIT 128

OPERATION MODE DETERMINATION UNIT 122

DETERMINATION UNIT 127

FEATURE QUANTITY CALCULATION UNIT 123

REFERENCE REGION GENERATION UNIT 126

REFERENCE MATRIX CALCULATION UNIT 124

FEATURE QUANTITY DISTRIBUTION GENERATION UNIT 125

STORAGE UNIT 130

18

## FIG. 4

PHASE CURRENT CALCULATION UNIT ~111

ANGLE SENSOR ~712

(Iu,Iv,Iw)

θ

β
Iv
Iu α
Iw

~112

(Iα,Iβ)

β
Iq
Id
θ
α

~113

(Id,Iq)

## FIG. 5

START

GENERATE REFERENCE REGION IN PRE-TRAINING ~ST100

PERFORM ABNORMALITY DIAGNOSIS IN ACTUAL OPERATION ~ST200

END

# FIG. 6

START

ACQUIRE DATE IN NORMAL STATE — ST101

DETERMINE OPERATION MODE — ST102

CALCULATE FEATURE QUANTITIES IN NORMAL CASE — ST103

CALCULATE REFERENCE MATRIX — ST104

GENERATE FEATURE QUANTITY DISTRIBUTION (REFERENCE DISTRIBUTION) — ST105

GENERATE REFERENCE REGION — ST106

CAUSE REFERENCE MATRIX AND REFERENCE REGION TO BE STORED SO AS TO BE ASSOCIATED WITH OPERATION MODE — ST107

END

## FIG. 7

START

ACQUIRE DATA DURING ACTUAL OPERATION — ST201

DETERMINE OPERATION MODE — ST202

CALCULATE FEATURE QUANTITIES DURING ABNORMALITY DIAGNOSIS — ST203

GENERATE FEATURE QUANTITY DISTRIBUTION — ST204

COUNT DOTS, OF FEATURE QUANTITY DISTRIBUTION, OUTSIDE OF REFERENCE REGION — ST205

IS PROPORTION OF DOTS OUTSIDE OF REFERENCE REGION EQUAL TO OR HIGHER THAN THRESHOLD VALUE? — ST206

N

Y

ABNORMALITY IS PRESENT — ST207

ABNORMALITY IS ABSENT — ST208

OUTPUT RESULT OF DIAGNOSIS — ST209

END

FIG. 8

FIG. 9

# FIG. 10

| | | DRIVE FREQUENCY | | |
|---|---|---|---|---|
| | | 35Hz | 40Hz | · · |
| LOAD TORQUE | 2Nm | MODE (1, 1) | MODE (1, 2) | |
| | 4Nm | MODE (2, 1) | MODE (2, 2) | |
| | · · | | | |

# FIG. 11

## INTERNATIONAL SEARCH REPORT

International application No.

PCT/JP2021/014928

### A. CLASSIFICATION OF SUBJECT MATTER
H02P 29/024(2016.01)i
FI: H02P29/024

According to International Patent Classification (IPC) or to both national classification and IPC

### B. FIELDS SEARCHED

Minimum documentation searched (classification system followed by classification symbols)
H02P29/024

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/202567 A1 (IHI POWER SYSTEMS CO LTD) 08 October 2020 (2020-10-08) paragraphs [0022]-[0067], fig. 1-5 | 1-14 |
| A | JP 2006-250818 A (TOENEC CORP) 21 September 2006 (2006-09-21) paragraphs [0010]-[0024], fig. 1-6 | 1-14 |
| A | JP 2006-161677 A (MITSUBISHI ELECTRIC CORP) 22 June 2006 (2006-06-22) paragraphs [0012]-[0105], fig. 1-14 | 1-14 |
| A | JP 2005-266965 A (TOSHIBA CORP) 29 September 2005 (2005-09-29) paragraphs [0032]-[0208], fig. 1-16 | 1-14 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 June 2021 (01.06.2021) | 08 June 2021 (08.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2021/014928

| Patent Documents referred in the Report | Publication Date | Patent Family | Publication Date |
|---|---|---|---|
| WO 2020/202567 A1 | 08 Oct. 2020 | (Family: none) | |
| JP 2006-250818 A | 21 Sep. 2006 | (Family: none) | |
| JP 2006-161677 A | 22 Jun. 2006 | (Family: none) | |
| JP 2005-266965 A | 29 Sep. 2005 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019079356 A